# EUROPEAN PATENT APPLICATION

(11) **EP 2 448 261 A1**
(43) Date of publication of application: **02.05.2012**
(21) Application number: 10783319.6
(22) Date of filing: 27.05.2010
(51) Int. Cl.: H04N 7/173

(54) **RECEIVER AND RECEIVER CONTROL METHOD**

(30) Priority: 01.06.2009 JP 2009132254
(71) Applicant: Sharp Kabushiki Kaisha, Osaka-shi, Osaka 545-8522 (JP)
(72) Inventor: HANZANA, Atsushi, Osaka-shi Osaka 545-8522 (JP)
(74) Representative: Müller - Hoffmann & Partner
(86) International application number: PCT/JP2010/059018
(87) International publication number: WO 2010/140535

(57) **Abstract**

To provide a receiver which, by a simple process and in consideration of purpose of use of an electronic program guide, reduces the data size of program guide information to be stored in a storage device, a television broadcast receiver (1) of the present invention receives EPG data and records it in a memory (28). The EPG data includes broadcasting period information indicating, for each program individually manageable by the receiver (1), the broadcasting time length of the program. The receiver (1) includes: a storage target selecting section (52) that selects, by referring to the broadcasting period information of the each program included in EPG data received, a program having a broadcasting time whose length falls within a predetermined range, and generates adjusted EPG data (60) including the selected program; and (ii) an EPG data recording section (54) that records the generated adjusted EPG data (60) in the memory (28).

## Description

### Technical Field

The present invention relates to a receiver for (i) receiving program guide information for use in outputting an electronic program guide indicative of a combination of programs and (ii) recording the program guide information in a storage device, and also relates to a receiver control method.

### Background Art

At present, more and more television broadcast receivers such as digital televisions are capable of receiving television programs through various communication paths such as terrestrial television broadcasting, satellite broadcasting, and cable broadcasting in addition to conventional analog broadcasting. This has increased (i) the number of broadcasting stations from which a television broadcast receiver can receive broadcasting, and proportionately with such an increase, (ii) the number of television programs which a television broadcast receiver can receive. In view of this, there has been developed an electronic program guide system or EPG (as in, for example, Patent Literature 1) for displaying a program guide on a television screen to efficiently provide a viewer with information about numerous television programs that can be viewed.

Digital broadcasting, for example, is designed to allow EPG data, which is data for use in displaying a program guide, to be transmitted together with picture data and audio data. These EPG data, picture data, and audio data are each in units of packets, and are transmitted together as a transport stream (TS).

A television broadcast receiver, upon receipt of a transport stream, obtains EPG data from it, and saves the obtained EPG data in its built-in memory. The television broadcast receiver can display a program guide on a screen on the basis of the saved EPG data.

The memory included in the television broadcast receiver has a limit to its storage capacity. The memory thus may not be able to store all program information included in the obtained EPG data. In particular, in an environment where the television broadcast receiver can obtain numerous programs through various communication paths, EPG data includes information about numerous programs, and thus has a large data size. The television broadcast receiver, when storing EPG data in its memory, may not be able to store all program information.

In view of this, Patent Literature 2, for example, discloses the following technique: Assuming the case of storing, in a storage region allocated for a selected broadcasting station, all program information about programs broadcast by the broadcasting station, if the storage region does not have a storage capacity secured to store all the information about the programs, a piece of the program information which piece cannot be stored in the storage region is stored in a storage region allocated to store program information about programs broadcast by another broadcasting station. This technique allows a memory to store all delivered program information for a selected broadcasting station.

Further, Patent Literature 3 discloses a technique of compressing EPG data by, with reference to a table that shows, with an identifier, a combination of a plurality of values indicative of a property of a television program, replacing a unique combination of values with such an identifier in the table.

### Citation list

Patent Literature 1
   European Patent No. 1377049, specification (August 9, 2006)
Patent Literature 2
   Japanese Patent Application Publication, Tokukai, No. 2004-179829 A (Publication Date: June 24, 2004)
Patent Literature 3
   Japanese Patent Application Publication, Tokukai, No. 2005-20762 A (Publication Date: January 20, 2005)

### Summary of Invention

### Technical Problem

The above conventional techniques are unfortunately problematic in that data size of program guide information stored in a storage device such as a memory cannot be reduced by a simple process in consideration of the purpose of use of an electronic program guide.

Specifically, the technique of Patent Literature 2 requires a user to select in advance a broadcasting station for which all obtained program information is to be stored in a memory, and thus imposes a burden on the user. Further, while all program information about programs broadcast by such a selected broadcasting station can be stored in a memory, program information about programs broadcast by another broadcasting station cannot be stored in a memory at all, or only a very limited piece of such program information can be stored in a memory.

It is not a typical viewing mode for a user to view only programs broadcast by a particular, limited broadcasting station. Most users select, from among programs broadcast by numerous broadcasting stations, programs that they wish to view, and thus view such programs. Further, most users refer to an electronic program guide to efficiently select, from among programs broadcast by numerous broadcasting stations, programs that they wish to view. Thus, a technique, such as that of Patent Literature 2, which requires selecting in advance a broadcasting station from which to obtain program information does not sufficiently take the original purpose of use of an electronic program guide into consideration.

Further, the technique of Patent Literature 3 requires in advance (i) extracting all unique combinations of values included in EPG data and (ii) creating a table indicative of correspondence between the unique combinations of values and identifiers. The technique of Patent Literature 3 further requires a conversion process of, by referring to the table, replacing all information in obtained EPG data with identifiers. The technique of Patent Literature 3 thus requires a complicated process in the case of storing obtained EPG data in a memory. This indicates that the technique of Patent Literature 3 does not make it possible to, by a simple process, reduce data size of EPG data in order to store the EPG data in a memory.

The present invention has been accomplished in view of the above problems. It is an object of the present invention to provide (i) a receiver, (ii) a receiver control method, (iii) a receiver control program, and (iv) a recording medium in which a receiver control program is recorded, each of which, by a simple process and in consideration of the purpose of use of an electronic program guide, reduces the data size of program guide information to be stored in a storage device.

### Solution to Problem

To attain the above object, a receiver of the present invention is a receiver for (i) receiving program guide information for use in outputting an electronic program guide indicative of a combination of programs and (ii) recording the program guide information in a storage device, the program guide information including, for each program individually manageable by the receiver, at least broadcasting period information indicative of a length of a broadcasting time of the each program, the receiver including: generating means for (i) selecting, by referring to the broadcasting period information of the each program included in the program guide information received by the receiver, a program having a first broadcasting time whose length falls within a predetermined range and (ii) generating adjusted program guide information, which is different from the program guide information received by the receiver and which includes the selected program having the first broadcasting time; and recording means for recording, in the storage device, the adjusted program guide information generated by the generating means.

The above predetermined range has a length that is set in accordance with, for example, the length of the broadcasting time of a program for which (i) a demand is low for individual management such as presetting recording in reference to an electronic program guide with use of the receiver of the present invention and for which (ii) a demand by a viewer is low for learning the broadcasting start time and the broadcasting end time.

Examples of a broadcast having a small broadcasting time length of approximately several minutes include (i) a program inserted to fill the gap between the end time of one program and the start time of another program and (ii) a program providing incidental information such as a commercial of a program to be broadcast in the future. Examples of a broadcast having a large broadcasting time length of, for example, over 6 hours include a broadcast having no broadcasting content such as a broadcast informing viewers that broadcasting has been stopped.

Such broadcasts having a small broadcasting time length of approximately several minutes or a large broadcasting time length of, for example, 6 hours are thus those for which a demand is low for individual management with use of the receiver. Further, such broadcasts having a small broadcasting time length of approximately several minutes or a large broadcasting time length of, for example, 6 hours are those for which a demand by a viewer is low for learning the broadcasting start time and the broadcasting end time in reference to an electronic program guide.

In view of this, the above predetermined range for the receiver of the present invention has a length that is set so that it is possible to appropriately exclude a program for which a demand is low for individual management in reference to an electronic program guide and for which a demand by a viewer is low for learning the broadcasting start time and the broadcasting end time.

The above configuration, which includes the generating means and the recording means, makes it possible to generate adjusted program guide information, that is, program guide information including only a program having a broadcasting time whose length falls within the predetermined range of length. In other words, the above configuration makes it possible to (i) delete, from program guide information received, a program having a broadcasting time whose length falls outside the predetermined range of length and thus (ii) record, in the storage device, adjusted program guide information having a reduced data size.

As described above, the receiver of the present invention can (i) delete, for example, a program for which a demand for individual management is low and thus (ii) generate new program guide information, that is, adjusted program guide information. This makes it possible to record, in the storage device, program guide information generated by reducing the data size while taking the purpose of use of an electronic program guide into consideration. The above arrangement further reduces the data size of program guide information by a very simple process of excluding, from an electronic program guide, a program having a broadcasting time whose length falls outside a predetermined time range.

The receiver of the present invention therefore achieves the advantage of reducing, by a simple process and in consideration of the purpose of use of an electronic program guide, the data size of program guide information to be stored in a storage device.

To attain the above object, a receiver control method of the present invention is a method for controlling a receiver for (i) receiving program guide information for use in outputting an electronic program guide indicative of a combination of programs and (ii) recording the program guide information in a storage device, the program guide information including, for each program individually manageable by the receiver, at least broadcasting period information indicative of a length of a broadcasting time of the each program, the method including the steps of: (A) (i) selecting, by referring to the broadcasting period information of the each program included in the program guide information received by the receiver, a program having a broadcasting time whose length falls within a predetermined range and (ii) generating adjusted program guide information, which is different from the program guide information received by the receiver and which includes the selected program; and (B) recording, in the storage device, the adjusted program guide information generated in the step (A).

The above method, which includes the step (A) and the step (B), makes it possible to generate adjusted program guide information, that is, program guide information including only a program having a broadcasting time whose length falls within the predetermined range of length. In other words, the above configuration makes it possible to (i) delete, from program guide information received, a program having a broadcasting time whose length falls outside the predetermined range of length and thus (ii) record, in the storage device, adjusted program guide information having a reduced data size.

As described above, the receiver control method of the present invention can (i) delete, for example, a program for which a demand for individual management is low and thus (ii) generate new program guide information, that is, adjusted program guide information. This makes it possible to record, in the storage device, program guide information generated by reducing the data size while taking the purpose of use of an electronic program guide into consideration. The above arrangement further reduces the data size of program guide information by a very simple process of excluding, from an electronic program guide, a program having a broadcasting time whose length falls outside a predetermined time range.

The receiver control method of the present invention therefore achieves the advantage of reducing, by a simple process and in consideration of the purpose of use of an electronic program guide, the data size of program guide information to be stored in a storage device.

### Advantageous Effects of Invention

As described above, a receiver of the present invention is a receiver for (i) receiving program guide information for use in outputting an electronic program guide indicative of a combination of programs and (ii) recording the program guide information in a storage device, the program guide information including, for each program individually manageable by the receiver, at least broadcasting period information indicative of a length of a broadcasting time of the each program, the receiver including: generating means for (i) selecting, by referring to the broadcasting period information of the each program included in the program guide information received by the receiver, a program having a first broadcasting time whose length falls within a predetermined range and (ii) generating adjusted program guide information, which is different from the program guide information received by the receiver and which includes the selected program having the first broadcasting time; and recording means for recording, in the storage device, the adjusted program guide information generated by the generating means.

The receiver of the present invention therefore achieves the advantage of reducing, by a simple process and in consideration of the purpose of use of an electronic program guide, the data size of program guide information to be stored in a storage device.

A receiver control method of the present invention is a method for controlling a receiver for (i) receiving program guide information for use in outputting an electronic program guide indicative of a combination of programs and (ii) recording the program guide information in a storage device, the program guide information including, for each program individually manageable by the receiver, at least broadcasting period information indicative of a length of a broadcasting time of the each program, the method including the steps of: (A) (i) selecting, by referring to the broadcasting period information of the each program included in the program guide information received by the receiver, a program having a broadcasting time whose length falls within a predetermined range and (ii) generating adjusted program guide information, which is different from the program guide information received by the receiver and which includes the selected program; and (B) recording, in the storage device, the adjusted program guide information generated in the step (A).

The receiver control method of the present invention therefore achieves the advantage of reducing, by a simple process and in consideration of the purpose of use of an electronic program guide, the data size of program guide information to be stored in a storage device.

### Brief Description of Drawings

Fig. 1

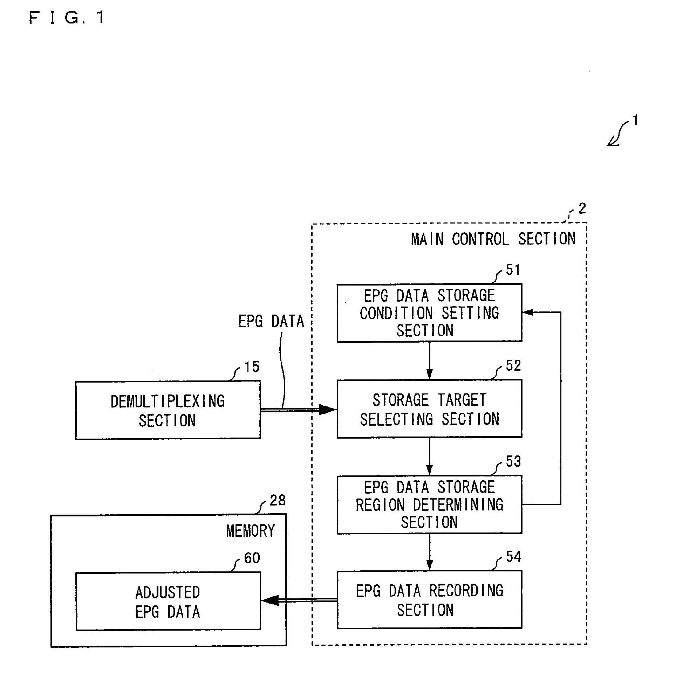

   Fig. 1 is a block diagram illustrating a software configuration of a television broadcast receiver, the software configuration concerning an EPG data storing process, in accordance with an embodiment of the present invention.
Fig. 2

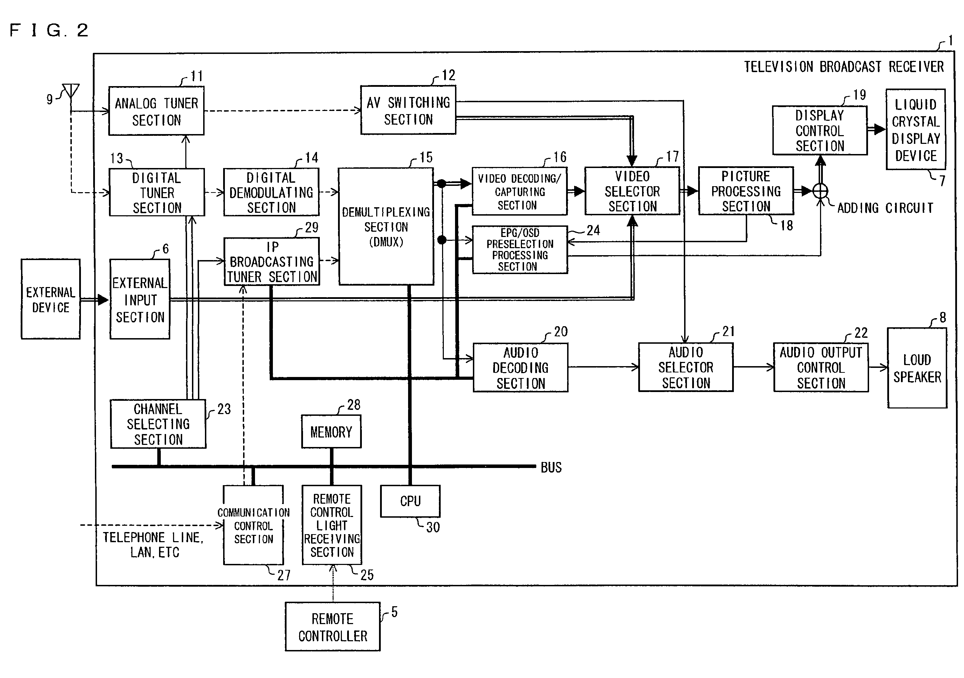

   Fig. 2 is a block diagram illustrating a main configuration of a television broadcast receiver in accordance with an embodiment of the present invention.
Fig. 3

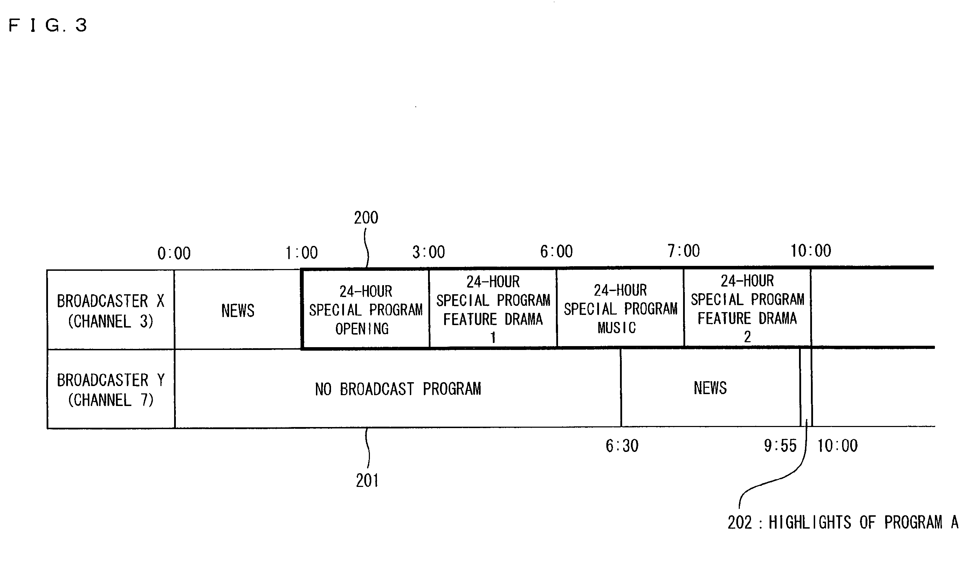

   Fig. 3 is a diagram illustrating an example of broadcasting time frames of respective programs in an electronic program guide in accordance with an embodiment of the present invention.
Fig. 4

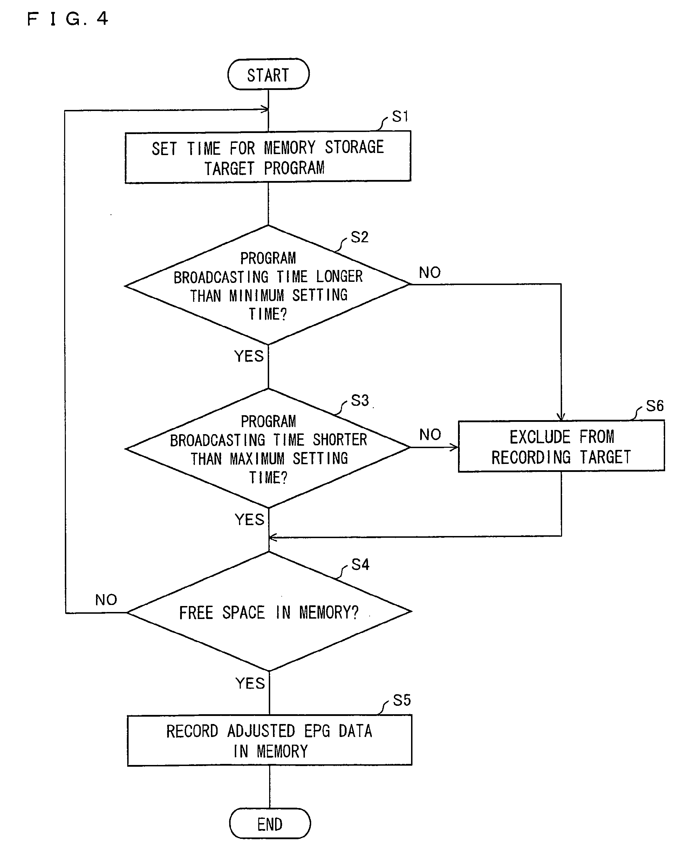

   Fig. 4 is a flowchart illustrating an example of an EPG data storing process by a television broadcast receiver in accordance with an embodiment of the present invention.
Fig. 5

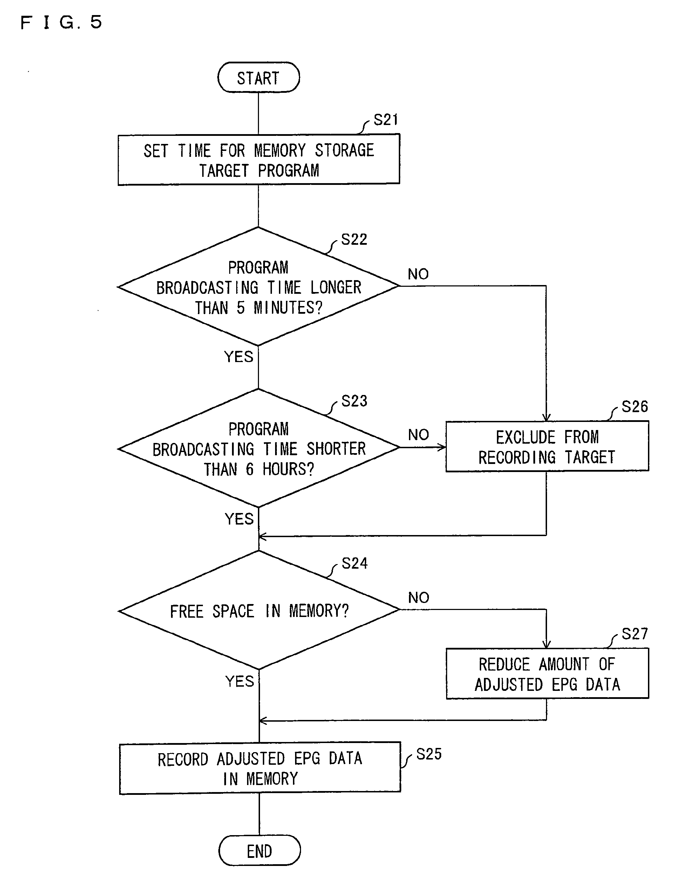

   Fig. 5 is a flowchart illustrating an example of an EPG data storing process by a television broadcast receiver in accordance with an embodiment of the present invention.
Fig. 6

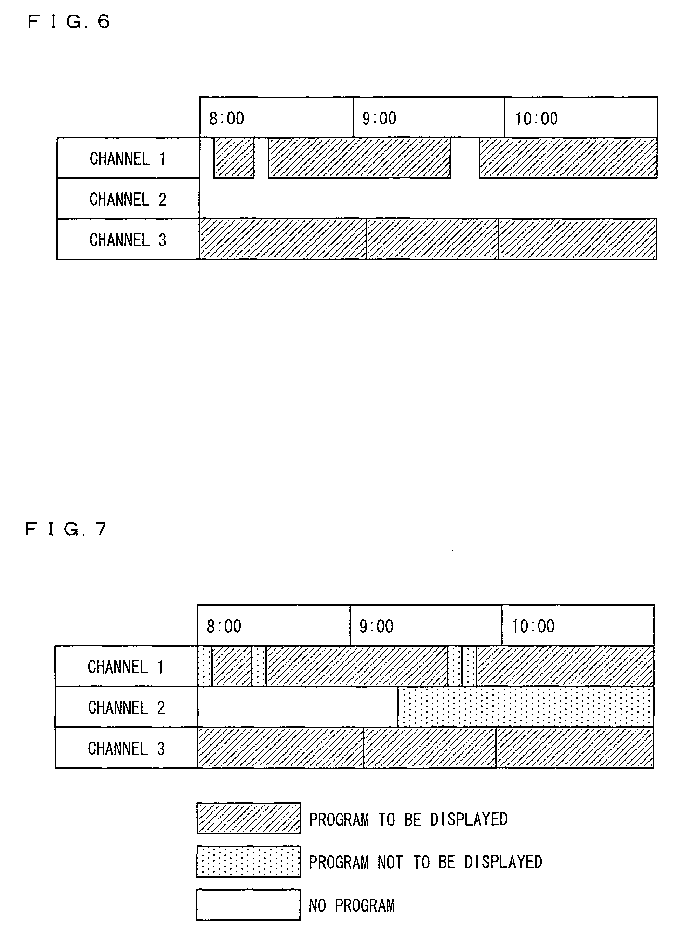

   Fig. 6 is a diagram illustrating an example display of an electronic program guide based on adjusted EPG data in accordance with an embodiment of the present invention.
Fig. 7
   Fig. 7 is a diagram illustrating an example display of an electronic program guide based on adjusted EPG data in accordance with an embodiment of the present invention.

### Description of Embodiments

An embodiment of the present invention is specifically described below with reference to Figs. 1 through 7. A television broadcast receiver (receiver) 1 in accordance with the present embodiment is a digital television which obtains EPG data (program guide information) together with picture data and audio data, so as to display an electronic program guide on a screen on the basis of the obtained EPG data.

EPG data at least includes, as program information on each program to be broadcast within a predetermined period (for example, eight days) from now, a service name (a channel), a broadcasting company name, and program broadcasting start and end time, i.e., broadcasting period information indicative of a program broadcasting period.

The television broadcast receiver 1 in accordance with the present embodiment is arranged to delete, from EPG data received, a piece of program information on a program which piece does not meet a predetermined requirement and to store, in a memory (a storage device) 28, the EPG data including the other pieces of program information (described later). Note that the present specification refers to EPG data, from which a piece of program information which piece does not meet a predetermined requirement has been deleted, as adjusted EPG data (adjusted program guide information) 60. According to the present embodiment, the predetermined requirement is set for a length of a broadcasting time of each program, and whether or not the length of the broadcasting time falls within a predetermined range determines whether or not the each program meets the predetermined requirement.

### (Arrangement of Television Broadcast Receiver)

First, a schematic arrangement of the television broadcast receiver 1 is to be described with reference to Fig. 2. Fig. 2, which shows the embodiment of the present invention, is a block diagram illustrating a main arrangement of the television broadcast receiver 1.

The television broadcast receiver 1 includes an external input section 6, a liquid crystal display device 7, a loud speaker 8, a broadcasting receiving antenna 9, an analog tuner section 11, an AV switching section 12, a digital tuner section 13, a digital demodulating section 14, a demultiplexing section (DMUX) 15, a video decoding/ capturing section 16, a video selector section 17, a picture processing section 18, a display control section 19, an audio decoding section 20, an audio selector section 21, an audio output control section 22, a channel selecting section 23, an EPG/OSD preselection processing section 24, a remote control light receiving section 25, a communication control section 27, the memory 28, an IP broadcasting tuner section 29, and a CPU (central processing unit) 30 (see Fig. 2). Note that the display control section 19 and the liquid crystal display device 7 constitute a display section of the present invention.

The analog tuner section 11 receives, via the broadcasting receiving antenna 9, analog broadcasting airwaves transmitted from a broadcasting station, so as to select a specified broadcasting signal. The analog tuner section 11 selects a broadcasting signal in response to a channel selection instruction from the channel selecting section 23.

The AV switching section 12 extracts, from the broadcasting signal selected by the analog tuner section 11, an audio signal and a video signal. The AV switching section 12 transmits (i) the extracted audio signal to the audio selector section 21 and (ii) the extracted video signal to the video selector section 17.

The digital tuner section 13 receives, via the broadcasting receiving antenna 9, analog broadcasting airwaves transmitted from a broadcasting station, so as to select a specified broadcasting signal. The digital tuner section 13 selects a broadcasting signal in response to a channel selection instruction from the channel selecting section 23.

The digital demodulating section 14 demodulates the broadcasting signal selected by the digital tuner section 13. The digital demodulating section 14 supplies, to the demultiplexing section (DMUX) 15, data obtained by demodulating the broadcasting signal received from the digital tuner section 13.

The IP broadcasting tuner section 29 selects, in response to a channel selection instruction from the channel selecting section 23, a broadcasting signal of IP broadcasting to be received via the communication control section 27 (described later). The IP broadcasting tuner section 29 selects and receives a specified broadcasting signal, so as to supply the received broadcasting signal to the demultiplexing section (DMUX) 15.

The demultiplexing section (DMUX) 15 demultiplexes, to a video signal and an audio signal, a multiplexed signal received from the digital demodulating section 14 or the IP broadcasting tuner section 29. The demultiplexing section (DMUX) 15 also extracts EPG data included in a broadcasting signal. The demultiplexing section (DMUX) 15 transmits (i) the demultiplexed video signal to the video decoding/ capturing section 16 and (ii) the demultiplexed audio signal to the audio decoding section 20. The EPG data extracted by the demultiplexing section (DMUX) 15 is subjected to write control by the CPU 30, so as to be temporarily recorded in the memory 28. In a case where the EPG data is displayed, the EPG data is subjected to readout control by the CPU 30, so as to be read out from the memory 28 and transmitted to the EPG/OSD preselection processing section 24.

The video decoding/ capturing section 16 decodes the video signal demultiplexed by the demultiplexing section (DMUX) 15, and captures, as a still image, video information included in the video signal. The video decoding/ capturing section 16 transmits the decoded video signal to the video selector section 17.

The video selector section 17 selects, from (i) a video signal received from the external input section 6, (ii) a video signal included in the broadcasting signal selected by the analog tuner section 11, and (iii) a video signal included in the broadcasting signal selected by the digital tuner section 13, a video signal to be outputted, so as to switch an output thereof. The video selector section 17 switches the output in accordance with a control instruction from the CPU 30. The video selector section 17 supplies the selected video signal to the picture processing section 18.

The picture processing section 18 carries out picture processing such as a noise reduction, a sharpness adjustment, and/or a contrast adjustment with respect to the video signal received from the video selector section 17, so as to convert the video signal to picture data which can be suitably displayed in the liquid crystal display device 7. The picture processing section 18 supplies, to the display control section 19, the picture data which has been subjected to the picture processing.

The display control section 19 controls the received picture data to be supplied to and displayed in the liquid crystal display device 7. Note that the display control section 19 can output the picture data together with (i) an electronic program guide (EPG: Electronic Program Guide) prepared by the EPG/OSD preselection processing section 24 (described later) or (ii) OSD (on-screen display) data.

The audio decoding section 20 decodes the audio signal demultiplexed by the demultiplexing section (DMUX) 15. The audio decoding section 20 supplies the decoded audio signal to the audio selector section 21.

The audio selector section 21 selects, from (i) an audio signal received from the external input section 6, (ii) an audio signal included in the broadcasting signal selected by the analog tuner section 11, and (iii) an audio signal included in the broadcasting signal selected by the digital tuner section 13, an audio signal to be outputted, so as to switch an output thereof. The audio selector section 21 switches the output in accordance with a control instruction from the CPU 30. The audio selector section 21 supplies the selected audio signal to the audio output control section 22. The audio output control section 22 converts the received audio signal to a format in which the audio signal can be supplied from the loud speaker 8, so as to supply the audio signal having the format to the loud speaker 8.

The EPG/OSD preselection processing section 24 prepares an electronic program guide in accordance with the EPG data periodically updated and stored in the memory 28. The EPG/OSD preselection processing section 24 also generates OSD display data in accordance with OSD image data (not shown) stored in the memory 28 in advance. Note that the OSD image data is used to render various pieces of information such as a setup menu screen, a POP display screen, a volume gauge, current time, and a selected channel. The EPG/OSD preselection processing section 24 supplies the prepared electronic program guide and the generated OSD display data to the display control section 19. Note that, in a case where an OSD is displayed together with a picture, the OSD display data supplied from the EPG/OSD preselection processing section 24 is added, by an adding circuit, to the picture data supplied from the picture processing section 18, so that the OSD display data to which the picture data has been added is supplied to the display control section 19.

The remote control light receiving section 25 receives an optical signal supplied from the remote controller 5, so as to receive a control instruction from the remote controller 5. The remote control light receiving section 25 transmits the received control instruction to the CPU 30.

The communication control section 27 carries out control so as to establish a communication with an external device via networks such as a telephone line, a LAN and the Internet, or an HDMI (High Definition Multimedia Interface) cable. However, such a medium for a connection with an external device is not limited to the networks described above or the HDMI cable.

The memory 28, which is a rewritable nonvolatile memory, is exemplified by a flash memory. The memory 28 includes (i) a recording region in which a program is stored that is read out by the CPU 30 to carry out various control operations, (ii) a storage region in which the EPG data is stored, and (iii) a storage region in which the OSD display data for displaying the OSD (none of which regions (i) through (iii) is particularly shown).

The CPU 30 is used for each section included in the television broadcast receiver 1 to carry out various control operations. The CPU 30 can implement various functions by reading out, to a RAM or the like, the program recorded in the memory 28, so as to execute the program thus read out.

### (Configuration for EPG data storing process)

Next, with reference to Fig. 1, the following describes a software configuration for the EPG data storing process in the television broadcast receiver 1 configured as above. Fig. 1 shows an embodiment of the present invention, and is a block diagram illustrating a software configuration for the EPG data storing process in the television broadcast receiver 1.

Note that the television broadcast receiver 1 of the present embodiment is configured to regularly receive a broadcast wave and obtain EPG data. Note also that program information of a program broadcast in the past is deleted from the EPG data (adjusted EPG data 60) to be recorded in the memory 28. Further, the television broadcast receiver 1 is configured such that program information of a program having a broadcasting time whose length falls outside a predetermined range is also deleted from the adjusted EPG data 60 as described below.

As illustrated in Fig. 1, the television broadcast receiver 1 includes a main control section 2 including, as a functional block, an EPG data storage condition setting section (range changing means) 51, a storage target selecting section (generating means) 52, an EPG data storage region determining section (determining means) 53, and an EPG data recording section (recording means) 54.

The EPG data storage condition setting section 51 sets a selection condition for selection of program information to be included in the adjusted EPG data 60 from among the program information contained in the obtained EPG data. Specifically, the EPG data storage condition setting section 51 sets, as the selection condition, a range of a program broadcasting period, which is a period of time from start of broadcasting of a program to end of the broadcasting of the program.

For example, the EPG data storage condition setting section 51 sets the selection condition so that program information of a program whose program broadcasting period is longer than 5 minutes and shorter than 6 hours is selected as the program information to be included in the adjusted EPG data 60. The EPG data storage condition setting section 51 transmits the selection condition to the storage target selecting section 52.

Note that the program broadcasting period that is taken into consideration as the selection condition is a period of time from start of broadcasting of an individually manageable program to end of the broadcasting of the individually manageable program (for example, a program that can be designated in the EPG data as a target of preset recording of the television broadcast receiver 1). Accordingly, the program broadcasting period does not necessarily agree with an actual program broadcasting period. For example, program information of a special program broadcast for 24 hours ("24-HOUR SPECIAL PROGRAM 200") is constituted by a plurality of pieces of program information in the EPG data as illustrated in Fig. 3. Accordingly, even if a program broadcasting period of the special program is 24 hours in total, the "24-HOUR SPECIAL PROGRAM 200" can be regarded as a program which satisfies the above selection condition, as long as a program broadcasting period of each program managed in the EPG data falls within the predetermined range. Note that Fig. 3 shows an embodiment of the present invention, and is a diagram illustrating an example of broadcasting time frames of programs in an electronic program guide.

Meanwhile, during a period ("NO BROADCAST PROGRAM 201") in which no program is broadcast, broadcast data is delivered so that a text image, a still image, or the like indicating that no program is broadcast is displayed on the television broadcast receiver 1. Accordingly, although no program is broadcast during the period of "NO BROADCAST PROGRAM 201", program information of the NO BROADCAST PROGRAM 201 is contained in the EPG data. That is, in the example illustrated in Fig. 3, the EPG data contains, as the program information of the NO BROADCAST PROGRAM 201, information indicating that a broadcasting time is 6.5 h.

In the case where the selection condition is a program broadcasting period of shorter than 6 hours, the program information of the "NO BROADCAST PROGRAM 201" does not satisfy this selection condition. Further, in a case where the selection condition is a program broadcasting period of longer than 5 minutes, the "HIGHLIGHTS OF PROGRAM A 202" shown in Fig. 3, which is a program for a commercial of a program A, does not satisfy the selection condition.

In the television broadcast receiver 1 of the present embodiment, the EPG data storage condition setting section 51 can set an initial value of the selection condition in accordance with an instruction from a user. For example, in a case where a user sets the initial value of the selection condition with the use of the remote controller 5, the remote control light receiving section 25 receives an instruction from the remote controller 5. Then, the remote control light receiving section 25 transmits the instruction thus received to the EPG data storage condition setting section 51. In the television broadcast receiver 1 of the present embodiment, the initial value of the selection condition can be thus set in accordance with an instruction from a user.

The initial value is preferably set in consideration of the following point: The initial value is preferably set so that a program for which a demand is low for individual management in reference to an electronic program guide and for which a demand by a viewer is low for learning the broadcast start time and the broadcast end time can be appropriately excluded.

For example, it can be assumed that a program having a small broadcasting time length of approximately several minutes is (i) a program that is inserted to fill the gap between the end time of one program and the start time of another program which follows the one program or (ii) a program that provides incidental information such as a commercial of a program to be broadcast in the future. Further, it can be assumed that a program having a large broadcasting time length of, for example, over 6 hours is a program that has no broadcast content, such as a program informing a viewer that no program has been stopped.

Neither of (i) the program having a small broadcasting time length of approximately several minutes and (ii) the program having a large broadcasting time length of, for example, over 6 hours is strongly demanded for individual management in the television broadcast receiver 1. Further, neither of (i) the program having a small broadcasting time length of approximately several minutes and (ii) the program having a large broadcasting time length of, for example, over 6 hours is strongly demanded by a viewer to learn its broadcast start time and broadcast end time by referring to an electronic program guide.

In view of this, in the television broadcast receiver 1, the range of the initial value is set so that a program for which a demand is low for individual management in reference to an electronic program guide and for which a demand by a viewer is low for learning its broadcast start time and broadcast end time can be appropriately excluded.

The storage target selecting section 52 selects, on the basis of the selection condition received from the EPG data storage condition setting section 51, program information to be included in the adjusted EPG data 60. After generating the adjusted EPG data 60 made up of the program information thus selected, the storage target selecting section 52 instructs the EPG data storage region determining section 53 to determine whether or not the memory 28 has a free space for recording this adjusted EPG data 60.

In response to the instruction from the storage target selecting section 52, the EPG data storage region determining section 53 determines whether or not the memory 28 has a free space for recording the adjusted EPG data 60.

The EPG data storage region determining section 53 determines whether or not the memory 28 has a free space, for example, as follows: In the memory 28, (i) information indicative of a storage capacity of the memory 28, (ii) information indicative of an amount of data that has already been recorded in the memory 28, and (iii) information indicative of a position at which the data that has already been recorded is stored are recorded as management information. The EPG data storage region determining section 53 instructs the EPG data recording section 54 (described below) to read out the management information from the memory 28. The EPG data storage region determining section 53 determines whether or not the memory 28 has a free space for recording the adjusted EPG data 60, by referring to (i) the management information thus read out and (ii) an amount of the adjusted EPG data 60 generated by the storage target selecting section 52.

In a case where the EPG data storage region determining section 53 has determined that the memory 28 has a free space for recording the adjusted EPG data 60, the EPG data storage region determining section 53 instructs the EPG data recording section 54 to record the adjusted EPG data 60 in the memory 28.

Meanwhile, in a case where the EPG data storage region determining section 53 has determined that the memory 28 does not have a free space for recording the adjusted EPG data 60, the EPG data storage region determining section 53 instructs the EPG data storage condition setting section 51 to change the selection condition for selection of program information to be included in the adjusted EPG data 60. Specifically, in a case where the EPG data storage region determining section 53 has determined that the memory 28 does not have a free space for recording the adjusted EPG data 60, the EPG data storage region determining section 53 instructs the EPG data storage condition setting section 51 to change the selection condition so as to narrow the range set as the initial value.

The EPG data recording section 54 records the adjusted EPG data 60 in the memory 28 in response to the instruction from the EPG data storage region determining section 53.

### (EPG Data Storing Process)

Next, with reference to Fig. 4, the following describes a flow of the EPG data storing process carried out by the television broadcast receiver 1 configured as above. Fig. 4 shows an embodiment of the present invention, and is a flowchart showing an example of the EPG data storing process in the television broadcast receiver 1.

First, it is assumed that the television broadcast receiver 1 has already obtained EPG data. Note that this EPG data may be first EPG data obtained by the television broadcast receiver 1 or may be EPG data newly obtained for updating the EPG data that has already been obtained.

The EPG data storage condition setting section 51 sets, in accordance with an instruction from a user, a length of a program broadcasting period as an initial value of a selection condition for selection of program information to be included in the adjusted EPG data 60 (step S1; hereinafter the term "step" is omitted as in "S1"). For convenience of explanation, the selection condition is set so that a lower limit (minimum setting time) of a length of a program broadcasting period is 5 minutes and an upper limit (maximum setting time) of a length of a broadcasting time is 6 hours.

Note that it is only necessary that the EPG data storage condition setting section 51 set the initial value of the selection condition before the adjusted EPG data 60 is recorded in the memory 28. That is, the EPG data storage condition setting section 51 may set the initial value of the selection condition (i) before the television broadcast receiver 1 obtains the EPG data, (ii) when the television broadcast receiver 1 obtains the EPG data, or (iii) after the television broadcast receiver 1 obtains the EPG data.

The setting of the initial value of the selection condition is not limited to the arrangement in which the EPG data storage condition setting section 51 sets the initial value of the selection condition in accordance with an instruction from a user. Alternatively, the initial value of the selection condition may be set in advance before shipment from factories.

After the EPG data storage condition setting section 51 sets the initial value of the selection condition for selection of program information to be included in the adjusted EPG data 60, the storage target selecting section 52 judges whether or not a program broadcasting period of program information contained in the EPG data is longer than the minimum setting time (5 minutes in the present embodiment) (S2). Out of the program information contained in the EPG data, program information whose program broadcasting period is equal to or shorter than the minimum setting time is excluded from recording targets to be recorded in the memory 28, and therefore is not contained in the adjusted EPG data 60 (S6).

In a case of "YES" in step S2, the storage target selecting section 52 judges whether or not the program broadcasting period of the program information contained in the EPG data is shorter than the maximum setting time (6 hours, in the present embodiment) (S3). Out of the program information contained in the EPG data, program information whose program broadcasting period is equal to or longer than the maximum setting time is excluded from recording targets to be recorded in the memory 28, and therefore is not contained in the adjusted EPG data 60 (S6).

In steps S2 and S3, the storage target selecting section 52 thus exclude, from the obtained EPG data, program information that does not satisfy the selection condition, and thus generates the adjusted EPG data 60. Next, the EPG data storage region determining section 53 determines whether or not the memory 28 has a free space for recording the adjusted EPG data 60 (S4).

In a case where the EPG data storage region determining section 53 has determined in step S4 that the memory 28 has a free space for recording the adjusted EPG data 60 ("YES" in S4), the EPG data recording section 54 records the adjusted EPG data 60 in the memory 28 (S5).

Meanwhile, in a case where the EPG data storage region determining section 53 has determined that the memory 28 does not have a free space for recording the adjusted EPG data 60 ("NO" in S4), the EPG data storage region determining section 53 instructs the EPG data storage condition setting section 51 to change the selection condition for selection of the program information to be included in the adjusted EPG data 60. In response to the instruction from the EPG data storage region determining section 53, the EPG data storage condition setting section 51 changes at least one of the minimum setting time and the maximum setting time (S1). For example, the EPG data storage condition setting section 51 adds 5 minutes to the minimum setting time, previously set to 5 minutes, so that a new minimum setting time is set to 10 minutes. Alternatively, the EPG data storage condition setting section 51 subtracts 1 hour from 6 hours, which is the previous maximum setting time, so that a new maximum setting time is set to 5 hours.

After the EPG data storage condition setting section 51 thus changes the selection condition, the processes in step S2 through step S6 are carried out on the basis of the selection condition thus changed. The "EPG data storing processes" in S1 through S6 are repeated until the amount of the adjusted EPG data 60 generated on the basis of the obtained EPG data reaches an amount that can be recorded in the memory 28.

The above description has dealt with a case where the processes in S1 through S6 are repeated until the amount of the adjusted EPG data 60 generated on the basis of the obtained EPG data reaches an amount that can be recorded in the memory 28. However, the present embodiment is not limited to this.

For example, there may be a case where it is only necessary that, out of EPG data for 8 days, program information for a predetermined number of days (for example, 4 days) be contained in the adjusted EPG data 60. In such a case, the processes in S1 through S6 are repeated until an amount of the adjusted EPG data 60 generated on the basis of the EPG data containing program information for the predetermined number of days reaches an amount that can be recorded in the memory 28.

Further, the above description has dealt with an arrangement in which the selection condition is changed in a case where the memory 28 does not have a free space for recording the adjusted EPG data 60 made up of program information which satisfies the selection condition. However, the present embodiment is not limited to this. Another arrangement is also possible in which adjusted EPG data 60 made up of program information whose program broadcasting period falls within a range determined in advance by the EPG data storage condition setting section 51 is generated and recorded in the memory 28. That is, the adjusted EPG data 60 may be generated on the basis of a fixed selection condition and recorded in the memory 28 as shown in Fig. 5. The following describes in detail a case where the adjusted EPG data 60 is recorded in the memory 28 according to the processing flow shown in Fig. 5. Fig. 5 shows an embodiment of the present invention, and is a flowchart showing an example of the EPG data storing process in the television broadcast receiver 1.

First, it is assumed that the television broadcast receiver 1 has already obtained EPG data, as in the processing flow shown in Fig. 4.

The EPG data storage condition setting section 51 sets, in accordance with an instruction from a user, a length of a broadcasting time (program broadcasting period) as a selection condition for selection of program information to be included in the adjusted EPG data 60 (S21). For convenience of explanation, the selection condition is set so that a lower limit (minimum setting time) of a broadcasting time (program broadcasting period) is 5 minutes and an upper limit (maximum setting time) of a broadcasting time (program broadcasting period) is 6 hours.

After the selection condition for selection of the program information to be included in the adjusted EPG data 60 is set, the storage target selecting section 52 judges whether or not a length of a broadcasting time (program broadcasting period) of program information contained in the obtained EPG data is longer than the minimum setting time (5 minutes, in the present embodiment) (S22). Out of the program information contained in the EPG data, program information having a broadcasting time (program broadcasting period) whose length is equal to or shorter than the minimum setting time is excluded from recording targets to be recorded in the memory 28, and therefore is not contained in the adjusted EPG data 60 (S26).

In a case of "YES" in step S22, the storage target selecting section 52 judges whether or not the length of the broadcasting time (program broadcasting period) of the program information contained in the EPG data is shorter than the maximum setting time (6 hours, in the present embodiment) (S23). Out of the program information contained in the EPG data, program information having a broadcasting time (program broadcasting period) whose length is equal to or longer than the maximum setting time is excluded from recording targets to be recorded in the memory 28, and therefore is not contained in the adjusted EPG data 60 (S26).

In steps S22 and S23, the storage target selecting section 52 thus exclude, from the obtained EPG data, program information that does not satisfy the selection condition, and thus generates the adjusted EPG data 60. Next, the EPG data storage region determining section 53 determines whether or not the memory 28 has a free space for recording the adjusted EPG data 60 (S24).

In a case where the EPG data storage region determining section 53 has determined in step S24 that the memory 28 has a free space for recording the adjusted EPG data 60 ("YES" in S24), the EPG data recording section 54 records the adjusted EPG data 60 in the memory 28 (S25).

Meanwhile, in a case where the EPG data storage region determining section 53 has determined that the memory 28 does not have a free space for recording the adjusted EPG data 60 ("NO" in S24), the EPG data recording section 54 records, in the memory 28, only a portion of the adjusted EPG data 60 which portion can be stored in the memory 28. Specifically, the EPG data recording section 54 deletes later program information (i.e., program information of a program that is broadcast later) so as to reduce the amount of the adjusted EPG data 60 to an amount that can be recorded in the memory 28 (S27). Then, the EPG data recording section 54 records, in the memory 28, the adjusted EPG data 60 whose amount has been thus reduced (S25).

As described above, according to the television broadcast receiver 1 of the present embodiment, it is possible to (i) reduce an amount of EPG data by deleting, from program information contained in the EPG data, program information having a broadcasting time whose length falls outside a predetermined range and to (ii) record, in the memory 28 as adjusted EPG data 60, the EPG data whose amount has been thus reduced.

The program information thus deleted is "NO BROADCAST PROGRAM 201" informing a viewer that no program is broadcast, "HIGHLIGHTS OF PROGRAM A 202" for a commercial of a program, or the like. That is, the program information thus deleted is program information that is program information of a program for which a demand is low for individual management with use of the television broadcast receiver 1 or program information of a program for which a demand by a viewer is low for learning its broadcast start time and broadcast end time by referring to an electronic program guide, that is, program information that is less important in the electronic program guide.

Consequently, the television broadcast receiver 1 of the present embodiment can provide, on the basis of the adjusted EPG data 60, an electronic program guide (adjusted electronic program guide) from which program information of less importance is deleted, that is, an electronic program guide (adjusted electronic program guide) that takes the purpose of use of an electronic program guide into consideration.

The following describes, with reference to Figs. 6 and 7, a display of an electronic program guide (that is, an adjusted electronic program guide) based on the adjusted EPG data 60 generated as above. Figs. 6 and 7 are each a diagram illustrating an example display of an electronic program guide (adjusted electronic program guide) based on the adjusted EPG data 60 in accordance with the embodiment of the present invention.

The adjusted EPG data 60 recorded in the memory 28 is, (i) in response to an instruction by the user to display an electronic program guide and (ii) under a control instruction by the CPU 30, read from the memory 28, and supplied to the EPG/OSD preselection processing section 24. The adjusted EPG data 60 thus inputted to the EPG/OSD preselection processing section 24 is then supplied to the display control section 19, and is displayed by the liquid crystal display device 7 under a display control by the display control section 19. This operation causes an electronic program guide (adjusted electronic program guide) to be displayed on the basis of the adjusted EPG data 60, the electronic program guide being in the form of a display having a gap as illustrated in Fig. 6, specifically a display having a blank for a deleted piece of program information, that is, an area in which no program information is displayed. However, the form of a display of an electronic program guide (adjusted electronic program guide) based on the adjusted EPG data 60 is not limited to the above.

The form of a display may, for example, be as illustrated in Fig. 7. Specifically, an electronic program guide (adjusted electronic program guide) may be displayed such that the display mode is varied, by varying the effect of filling in a range, among (i) a portion (area) in which program information is displayed, (ii) a portion (area) in which program information has been deleted and is thus not displayed, and (iii) a portion (area) in which there is originally no program information. This makes it possible to visually discriminate among such different portions. The method for the visual discrimination is not limited to the above method of discrimination that involves varying the effect of filling in a range. The individual areas may alternatively be discriminated by indicating the areas by different colors.

The form of a display of an electronic program guide (adjusted electronic program guide) illustrated in Fig. 7 is preferred over the form of a display of an electronic program guide (adjusted electronic program guide) illustrated in Fig. 6 in that reference to an electronic program guide (adjusted electronic program guide) based on adjusted EPG data 60 makes it possible to clearly discriminate between a deleted piece of program information and a piece in which there is originally no program information.

Finally, the individual sections included in the television broadcast receiver 1, particular the EPG data storage condition setting section 51, the storage target selecting section 52, the EPG data storage region determining section 53, and the EPG data recording section 54, may be formed by hardware logic or by software. The main control section 2 is formed by the CPU 30. These functional blocks may be formed by the CPU 30 reading a program stored in the memory 28 to, for example, a RAM (not shown) and executing the program. The individual sections may be formed by software.

The television broadcast receiver 1 of the above embodiment receives EPG data in the form of a digital broadcast wave. The path through which to obtain EPG data is not limited to this. The television broadcast receiver 1 may, for example, be connected to a network and obtain EPG data from a deliverer thereof over the network. In the case where the television broadcast receiver 1 thus obtains EPG data over a network, the communication control section 27 of the television broadcast receiver 1 receives EPG data over the network, and transmits the EPG data thus received to the IP broadcasting tuner section 29. The IP tuner section 29 transmits the EPG data to the demultiplexing section (DMUX) 15, from which the EPG data is temporarily recorded in the memory 28 under a write control by the CPU 30.

The television broadcast receiver 1 of the above embodiment causes the liquid crystal display device 7 to display an electronic program guide (adjusted electronic program guide) on the basis of adjusted EPG data 60. The form of outputting an electronic program guide (adjusted electronic program guide) is, however, not limited to displaying it. In the case where, for example, the television broadcast receiver 1 is connected to a printer, an electronic program guide may be outputted by the printer in the form of a print.

The memory 28 for recording adjusted EPG data 60 is built in the television broadcast receiver 1 of the above embodiment. The configuration is, however, not limited to this. The adjusted EPG data 60 may be recorded in a storage device provided externally to the television broadcast receiver 1.

As described above, a receiver of the present invention can be construed as including the arrangement below. Further, a receiver control method of the present invention can be construed as including the steps below.

As described above, the receiver of the present invention may further include: determining means for determining a free space in a recording region of the storage device in which the adjusted program guide information is to be recorded; and range changing means for changing, in accordance with the free space determined by the determining means, the predetermined range set for a program broadcasting time length, wherein: the generating means (i) selects, by referring to the broadcasting period information of the each program included in the program guide information received by the receiver, a program having a second broadcasting time whose length falls within a range as changed by the range changing means and (ii) generates adjusted program guide information including the selected program having the second broadcasting time.

The above configuration, which includes the determining means, can determine whether the storage device has a recording region secured to record the adjusted program guide information. Further, the above configuration, which includes the range changing means, can change the predetermined range, which sets a condition for selecting a program, so that the adjusted program guide information can be stored in a free space in the storage region determined by the determining means.

The generating means can thus (i) select a program having a broadcasting time whose length falls within a range as changed by the range changing means, and (ii) generate adjusted program guide information including the selected program. The receiver of the present invention can, as described above, generate adjusted program guide information having a data size that can be recorded in a recording region of the storage device.

As described above, the receiver of the present invention may be arranged such that the range changing means changes the predetermined range by changing at least one of a smallest broadcasting time length and a largest broadcasting time length of the predetermined range.

The above arrangement makes it possible to appropriately reduce, (i) in consideration of the purpose of use of an electronic program guide and (ii) by, for example, increasing the minimum broadcasting time length or decreasing the maximum broadcasting time length of the predetermined range, the data size of program guide information to be stored in a storage device.

As described above, the receiver of the present invention may further include: a display section for displaying an adjusted electronic program guide, which is an electronic program guide based on the adjusted program guide information recorded in the storage device, wherein: the display section displays the adjusted electronic program guide so that a first area corresponding to a broadcasting period of the program selected by the generating means is visually discriminated from a second area corresponding to a broadcasting period of a program not selected by the generating means.

The above configuration, which includes the display section, can display an adjusted electronic program guide, that is, an electronic program guide based on the adjusted program guide information. The adjusted electronic program guide is displayed so that it is possible to visually discriminate between (i) an area corresponding to the broadcasting period of a program selected and (ii) an area corresponding to the broadcasting period of a program not selected. This allows a viewer who views the adjusted program guide information to learn the presence or absence of a program not selected.

As described above, the receiver of the present invention may be arranged such that the display section displays the adjusted electronic program guide so that the second area is visually discriminated from a third area corresponding to a period during which no program is broadcast.

The above arrangement allows the adjusted electronic program guide to be displayed so that it is possible to visually discriminate between (i) an area corresponding to the broadcasting period of a program not selected and (ii) an area corresponding to a period during which no program is broadcast. This allows a viewer who views the adjusted program guide information to, by discriminating (i) the broadcasting period of a program not selected from (ii) a period during which originally no program is broadcast, more clearly learn the presence or absence of a program not selected.

The receiver may be formed with a computer. In such a case, the present invention encompasses in its scope (i) a receiver control program for causing a computer to function as each of the means of the receiver so that the receiver is formed with a computer and (ii) a computer-readable recording medium on which the receiver control program is recorded.

The present invention is not limited by the description of the embodiment above, but may be altered in various manners within the scope of the claims. Any embodiment based on a proper combination of technical means achieved by appropriate modifications within the scope of the claims is also encompassed in the technical scope of the present invention.

### Industrial Applicability

The present invention is widely applicable in the case of reducing the data size of received EPG data to an appropriate size and recording the EPG data in a storage device having a severely limited storage capacity.

### Reference Signs List

1 television broadcast receiver (receiver)
2 main control section
5 remote controller
7 liquid crystal display device (display section)
19 display control section (display section)
24 EPG/OSD preselection processing section
25 remote control light receiving section
28 memory (storage device)
51 EPG data storage condition setting section (range changing means)
52 storage target selecting section (generating means)
53 EPG data storage region determining section (determining means)
54 EPG data recording section (recording means)
60 adjusted EPG data (adjusted program guide information)

## Claims

1. A receiver for (i) receiving program guide information for use in outputting an electronic program guide indicative of a combination of programs and (ii) recording the program guide information in a storage device,
the program guide information including, for each program individually manageable by the receiver, at least broadcasting period information indicative of a length of a broadcasting time of said each program,
the receiver comprising:
generating means for (i) selecting, by referring to the broadcasting period information of said each program included in the program guide information received by the receiver, a program having a first broadcasting time whose length falls within a predetermined range and (ii) generating adjusted program guide information, which is different from the program guide information received by the receiver and which includes the selected program having the first broadcasting time; and
recording means for recording, in the storage device, the adjusted program guide information generated by the generating means.

2. The receiver according to claim 1, further comprising:
determining means for determining a free space in a recording region of the storage device in which the adjusted program guide information is to be recorded; and
range changing means for changing, in accordance with the free space determined by the determining means, the predetermined range set for a program broadcasting time length,
wherein:
the generating means (i) selects, by referring to the broadcasting period information of said each program included in the program guide information received by the receiver, a program having a second broadcasting time whose length falls within a range as changed by the range changing means and (ii) generates adjusted program guide information including the selected program having the second broadcasting time.

3. The receiver according to claim 2,
wherein:
the range changing means changes the predetermined range by changing at least one of a smallest broadcasting time length and a largest broadcasting time length of the predetermined range.

4. The receiver according to any one of claims 1 to 3, further comprising:
a display section for displaying an adjusted electronic program guide, which is an electronic program guide based on the adjusted program guide information recorded in the storage device,
wherein:
the display section displays the adjusted electronic program guide so that a first area corresponding to a broadcasting period of the program selected by the generating means is visually discriminated from a second area corresponding to a broadcasting period of a program not selected by the generating means.

5. The receiver according to claim 4,
wherein:
the display section displays the adjusted electronic program guide so that the second area is visually discriminated from a third area corresponding to a period during which no program is broadcast.

6. A method for controlling a receiver for (i) receiving program guide information for use in outputting an electronic program guide indicative of a combination of programs and (ii) recording the program guide information in a storage device,
the program guide information including, for each program individually manageable by the receiver, at least broadcasting period information indicative of a length of a broadcasting time of said each program,
the method comprising the steps of:
(A) (i) selecting, by referring to the broadcasting period information of said each program included in the program guide information received by the receiver, a program having a broadcasting time whose length falls within a predetermined range and (ii) generating adjusted program guide information, which is different from the program guide information received by the receiver and which includes the selected program; and
(B) recording, in the storage device, the adjusted program guide information generated in the step (A).

7. A receiver control program for causing a computer to function as each of the means of the receiver according to any one of claims 1 to 5.

8. A computer-readable recording medium on which the receiver control program according to claim 7 is recorded.

## Amended claims

### Amended claims under Art. 19.1 PCT

**1.** Amended) A receiver for (i) receiving program guide information for use in outputting an electronic program guide indicative of a combination of programs and (ii) recording the program guide information in a storage device,
the program guide information including, for each program individually manageable by the receiver, at least broadcasting period information indicative of a length of a broadcasting time of said each program,
the receiver comprising:
generating means for (i) selecting, by referring to the broadcasting period information of said each program included in the program guide information received by the receiver, a program having a first broadcasting time whose length falls within a predetermined range and (ii) generating adjusted program guide information, which is different from the program guide information received by the receiver and which includes the selected program having the first broadcasting time;
recording means for recording, in the storage device, the adjusted program guide information generated by the generating means;
determining means for determining a free space in a recording region of the storage device in which the adjusted program guide information is to be recorded; and
range changing means for changing, in accordance with the free space determined by the determining means, the predetermined range set for a program broadcasting time length,
the generating means (i) selecting, by referring to the broadcasting period information of said each program included in the program guide information received by the receiver, a program having a second broadcasting time whose length falls within a range as changed by the range changing means and (ii) generating adjusted program guide information including the selected program having the second broadcasting time.

**2.** Canceled)

**3.** Amended)
The receiver according to claim 1,
wherein:
the range changing means changes the predetermined range by changing at least one of a smallest broadcasting time length and a largest broadcasting time length of the predetermined range.

**4.** Amended) The receiver according to claim 1 or 3, further comprising:
a display section for displaying an adjusted electronic program guide, which is an electronic program guide based on the adjusted program guide information recorded in the storage device,
wherein:
the display section displays the adjusted electronic program guide so that a first area corresponding to a broadcasting period of the program selected by the generating means is visually discriminated from a second area corresponding to a broadcasting period of a program not selected by the generating means.

**5.** The receiver according to claim 4,
wherein:
the display section displays the adjusted electronic program guide so that the second area is visually discriminated from a third area corresponding to a period during which no program is broadcast.

**6.** Amended)
A method for controlling a receiver for (i) receiving program guide information for use in outputting an electronic program guide indicative of a combination of programs and (ii) recording the program guide information in a storage device,
the program guide information including, for each program individually manageable by the receiver, at least broadcasting period information indicative of a length of a broadcasting time of said each program,
the method comprising the steps of:
(A) (i) selecting, by referring to the broadcasting period information of said each program included in the program guide information received by the receiver, a program having a first broadcasting time whose length falls within a predetermined range and (ii) generating adjusted program guide information, which is different from the program guide information received by the receiver and which includes the selected program having the first broadcasting time;
(B) recording, in the storage device, the adjusted program guide information generated in the step (A);
(C) determining a free space in a recording region of the storage device in which the adjusted program guide information is to be recorded; and
(D) changing, in accordance with the free space determined in the step (C), the predetermined range set for a program broadcasting time length,
the step (A) (i) selecting, by referring to the broadcasting period information of said each program included in the program guide information received by the receiver, a program having a second broadcasting time whose length falls within a range as changed in the step (D) and (ii) generating adjusted program guide information including the selected program having the second broadcasting time.

**7.** Amended)
A receiver control program for causing a computer to function as each of the means of the receiver according to any one of claims 1 and 3 to 5.

**8.** A computer-readable recording medium on which the receiver control program according to claim 7 is recorded.

Statement under Art. 19.1 PCT
1. Amendments

Claim 1: The original claim 2 has been rewritten into a new claim 1 in independent form.

Claim 2: Canceled

Claims 3, 4, and 7: Their respective dependencies have been revised in consistency with the cancellation of claim 2.

Claim 6: The original process claim 6 (directed to a receiver control method) has been rewritten to correspond to the receiver of claim 1 as amended. More specifically, claim 6 as amended further includes the following steps (a) and (b) and limitation (c) for the *"step (A)":*
*"determining a free space in a recording region of the storage device in which the adjusted program guide information is to be recorded"*
*"changing, in accordance with the free space determined in the step (C), the predetermined range set for a program broadcasting time length"*
*"... (i) selecting, by referring to the broadcasting period information of said each program included in the program guide information received by the receiver, a program having a second broadcasting time whose length falls within a range as changed in the step (D) and (ii) generating adjusted program guide information including the selected program having the second broadcasting time"*

The above step (a) has been added as supported by, for example, the description in the originally filed specification, paragraph [0090] and S24 of Fig. 5. The above step (b) has been added as supported by, for example, the description in the originally filed specification, paragraph [0092] and S27 of Fig. 5.

The limitation (c) indicative of the above process has been incorporated into the *"step (A)"* as supported by, the description in the originally filed specification, paragraph [0092] and S25 of Fig. 5.
